# EUROPEAN PATENT SPECIFICATION

(11) **EP 1 954 141 B1**
(45) Date of publication and mention of the grant of the patent: **09.03.2016**
(21) Application number: 06838342.1
(22) Date of filing: 22.11.2006
(51) Int. Cl.: A01N 59/00, A01N 25/08, A01P 1/00

(54) **SOLID BIOCIDAL COMPOSITIONS AND METHODS OF USING THE SAME**
FESTE BIOZIDE ZUSAMMENSETZUNGEN UND VERFAHREN ZU IHRER VERWENDUNG
COMPOSITIONS BIOCIDES SOLIDES ET PROCEDES D'UTILISATION DE CELLES-CI

(30) Priority: 30.11.2005 US 289990
(43) Date of publication of application: 13.08.2008
(73) Proprietor: Solenis Technologies Cayman, L.P., 8200 Schaffhausen (CH)
(72) Inventor: CHENG, Huai, N., Avondale, PA 19311-1432 (US)
(74) Representative: Hoffmann Eitle
(86) International application number: PCT/US2006/045321
(87) International publication number: WO 2007/064557

(56) References cited:
- EP-A- 0 005 286
- EP-A- 1 029 912
- EP-A- 1 293 482
- EP-A- 1 557 088
- GB-A- 1 126 108

## Description

### FIELD OF THE INVENTION

The present invention relates to stable, pH self-adjusting, solid compositions for the preparation of biocides useful in preventing or inhibiting the growth of living organisms in liquids.

### BACKGROUND OF THE INVENTION

Mixture of a solution of an ammonium salt and a solution of sodium hypochlorite is known to produce the biocidal agent monochloramine. Monohaloamines such as monochloramine have been reported as effective biocides for swimming pools and municipal water treatment applications (J. Beck, et al, Aqua (Oxford), 1, 25 (1986)). To generate monohaloamines, a solution of ammonium halide is typically mixed with a solution of hypohalite at elevated pH, thereby generating monohaloamine *in situ;* and the mixture is then used for the intended application. For example, Barak et al. U.S. Pat. Nos. 5,976,386, 6,132,628, and 6,478,973; and U.S. Pat. App. Pub. Nos. 2003/0121868, 2003/0132173, and 2005/0194324 (& EP1293482 A1) report processes that employ individual solutions of ammonium halide and sodium hypochlorite which are combined to generate a biocide for treatment of liquids. Similar biocidal systems have been reported in C. K. Davis, G. Casini, Pulp and Paper, February 2003 and S. Bharati, K. Ryan, Paper Asia, Vol. 19, No. 7, September 2003. Solution-based systems, however, can pose numerous difficulties related to use, storage, and handling. For example, the solutions can be unstable, requiring protection from exposure to ambient conditions and refrigeration. Transportation and handling of liquids is also undesirable due to excess weight and bulk, thereby limiting application and distribution of the technology. Accordingly, there is a present need for simpler and more portable methods for the generation of biocidal agents containing monohaloamines and related compounds. The compositions, systems, and methods provided herein are directed toward this end.

### SUMMARY OF THE INVENTION

The present invention provides dual agent solid compositions comprising:
a) a solid hypohalite;
b) a solid nitrogen source, which is a solid ammonium salt having at least one N-H functionality capable of reacting with a hypohalite; and
c) a component which is either:
   i) a solid pH control material that has at least one secondary function as a diluent, stabilizer, anti-caking agent, binder or desiccant; or
   ii) a combination of a solid pH control material and a diluent, stabilizer, anti-caking agent, binder, desiccant, or combination thereof; wherein said dual agent composition forms a biocidal mixture when combined with water.

The present invention further provides a system comprising a first single agent solid composition and a second single agent solid composition, wherein the first single agent solid composition comprises:
a) a solid nitrogen source, which is a solid ammonium salt having at least one N-H functionality capable of reacting with a hypohalite; and
b) a pH control material;
and wherein the second single agent solid composition comprises:
a) a solid hypohalite;
wherein the first single agent solid composition and the second single agent solid composition together form a biocidal mixture when combined with water.

The present invention further provides methods of preparing a biocidal mixture comprising:
a) combining a dual agent composition described herein with an amount of water suitable for producing a peak haloamine concentration of about 10 to about 10,000 ppm; or
b) combining the first and second single agent solid compositions of a system described herein with an amount of water suitable for producing a peak haloamine concentration of about 10 to about 10,000 ppm.

The present invention further provides biocidal mixtures prepared according to the methods described herein.

The present invention further provides methods of preventing or inhibiting the growth of living organisms in a liquid comprising:
a) preparing a biocidal mixture according to any of the methods described herein; and
b) treating the liquid with the biocidal mixture.

### DETAILED DESCRIPTION

### Dual Agent Compositions

The present invention provides, *inter alia,* solid dual agent compositions that, when combined with water, form biocidal mixtures useful for preventing or inhibiting growth of living organisms in liquids. The components of the dual agent composition can react upon combination with water to form reactive biocidal agents including monohaloamines and/or dihaloamines (collectively "haloamines"). The solid dual agent compositions of the invention have numerous advantages over liquid and other haloamine biocidal systems including, for example, improved stability, shelf-life, portability, and general ease of use. The dual agent solid compositions of the invention are further advantageously characterized by their stability and self pH-adjusting properties.

The solid dual agent compositions of the invention contain the following components: a) a solid hypohalite; b) a solid nitrogen source, which is a solid ammonium salt having at least one N-H functionality capable of reacting with a hypohalite; and c) a solid pH control material. The compositions can optionally further include one or more of the following solid components: d) a solid desiccant; e) a solid stabilizer; f) an anticaking agent; g) a binder; h) a disintegrant; i) a glidant; j) a solid diluent, or combination thereof.

Some of the components can serve multiple or overlapping functions. However, as used herein, the primary function of each component will be dictated by the name of the component. For example, the primary function of solid pH control material will be pH control of the eventual biocidal mixture. In some instances, the solid pH control material can also function as a diluent, stabilizer, dessicant, and/or other ingredient, but unless otherwise indicated herein, such secondary functions are optional. In another example, a desiccant may also function as a diluent, stabilizer, or other ingredient. Accordingly, the desiccant's primary function will be for protection of the composition from moisture, and any diluting or other properties will be considered secondary and therefore optional unless otherwise indicated. Thus, "primary function" (as determined by the name of the ingredient) as used herein refers to the main purpose for including the ingredient in the composition and also indicates that the ingredient is present in the composition in a sufficient or effective amount to substantially carry out that function. A "secondary function" refers to a functional property of an ingredient in addition to the primary function and that the ingredient is present in the composition in a sufficient or effective amount to substantially carry out both the primary and secondary functions. An ingredient can have multiple secondary functions.

In the case where an ingredient can potentially have multiple primary functions, it will be present in the present compositions to serve only one of those primary functions and the other functions will be considered secondary. For example, if a composition of the invention contains a pH control material and a desiccant, the pH control material will not be composed of the same substance as the desiccant. To further illustrate, if potassium carbonate is used as the pH control material and the composition also contains a separate desiccant ingredient, the desiccant will be other than potassium carbonate.

While not wishing to be bound by any theory, it is believed that when the solid dual agent composition is dissolved in a predetermined amount of water, the hypohalite component reacts with the solid nitrogen source, at the pH controlled largely by the pH control material, to form haloamines (e.g., monohaloamine and/or dihaloamine). Accordingly, compositions containing both a solid hypohalite and solid nitrogen source are referred to herein as "dual agent compositions."

Haloamines include, for example, monohaloamines, dihaloamines, and trihaloamines. Monohaloamines are amines that typically have one N-halogen bond. An example monohaloamine is monochloramine (NH₂Cl). Similarly, dihaloamines are characterized by two N-halogen bonds and trihaloamines are characterized by three N-halogen bonds. An example dihaloamine is dichloramine (NHCl₂) and an example trihaloamine is trichloramine (NCl₃). Methods for measuring concentration of haloamines are routine in the art and include the methods described in the Examples.

Typically, monohaloamines are formed at basic pH (e.g., greater than about pH 8); dihaloamines are formed from monohaloamines at acidic pH (e.g., at about pH 3-5); and trihaloamines are formed at very acidic pH (e.g., at about pH < 3). pH can be controlled by the amount and type of solid pH control material used in the composition, thereby allowing regulation of the type as well as amount of haloamine generated in the biocidal mixture. The pH control material also ultimately eliminates or reduces the need for subsequent pH adjustments or titrations of the biocidal mixture. This characteristic is one of the numerous advantages of the present invention. The optional desiccant, diluent, stabilizer, and other components of the compositions of the invention can influence stability and other properties of the solid compositions.

The solid hypohalite component can be a solid hypohalite salt including an alkali metal or alkaline earth metal hypohalite salt. Suitable solid hypohalites include magnesium, lithium, or calcium salts of hypochlorite, hypobromite, or hypoiodite. Example solid hypohalites include calcium hypochlorite and lithium hypochlorite. In some embodiments, the solid hypohalite is calcium hypochlorite.

The solid nitrogen source can be any solid ammonium salt having at least one N-H functionality capable of reacting with a hypohalite. The solid nitrogen source is an ammonium salt. Suitable ammonium salts are ammonium halides (e.g., ammonium chloride, ammonium bromide, etc.), ammonium sulfate, ammonium carbonate, and other ammonium salts. In some embodiments, the solid nitrogen source is ammonium sulfate or an ammonium halide. In further embodiments, the solid nitrogen source is ammonium chloride. In further embodiments, the solid nitrogen source is ammonium sulfate.

The pH control material can be any solid substance capable of maintaining or achieving a desired pH when the composition is mixed with water in order to obtain the desired compounds (e.g., monochloramine and/or dichloramine). In some embodiments, the pH control material is an inorganic salt (e.g., an alkali metal or alkaline earth metal salt) of a hydroxide (e.g., sodium hydroxide), carbonate (e.g., sodium carbonate, potassium carbonate, and the like), acetate (e.g., sodium acetate), phosphate, or other substance capable of keeping a solution at basic pH. In some embodiments, for example to encourage the formation of monochloramine, the solid pH control material maintains the biocidal mixture at a pH of about 8 to about 13, about 9 to about 12, about 10, or about 11. In some embodiments, the pH- control material is sodium hydroxide or sodium carbonate.

To encourage formation of dihaloamines, the pH control material can include a substance capable of keeping a solution at acidic pH. For example, the pH control material can be an inorganic salt of hydrogen phthalate or monobasic sodium phosphate. In some embodiments, the solid pH control material maintains the biocidal mixture at a pH of about 3 to about 6, about 3 to about 5, or about 4. It is sometimes desirable that the pH control material has relatively poor water solubility compared to the active agents. For example, lower solubility can delay acidification thereby allowing monohaloamines to be formed first at higher pH. The monohaloamines can then serve as precursors to the dihaloamines which are subsequently formed when the pH control material eventually dissolves and the solution reaches the desired acidic pH.

Other suitable pH control materials can include inorganic salts of the following substances: borate, phosphate, propionate, butyrate, or mixtures of these and the like.

In some embodiments, the solid pH control material has a secondary function as a diluent, such as when there is sufficient quantity of the solid pH control material to effectively dilute and disperse the actives (e.g., the solid nitrogen source and solid hypohalite) such that interaction between the solid actives is minimized thereby facilitating composition stability and extending shelf-life. Solid pH control materials having a secondary function as a diluent include, for example, substances containing salts of carbonate, such as sodium carbonate or potassium carbonate, or inorganic salts of hydrogen phthalate. A solid pH control material having a secondary function as a diluent makes up at least about 10 % by weight of the total composition. In some embodiments, when the pH control material has a secondary function as a diluent, little or no other material is present in the composition having a primary function as a diluent; however, materials having desiccating, binding, lubricating, anti-caking, or other primary functions can be included.

In some embodiments the solid pH control material has a secondary function as a desiccant, meaning that it preferentially absorbs and sequesters water vapor from the ambient surroundings serving to protect the moisture sensitive components (e.g., the actives) of the compositions of the invention and benefit stability. Example solid pH control materials that have a secondary function as a desiccant include, for example, substances containing salts of carbonate, such as potassium carbonate or sodium carbonate. In some embodiments, the solid pH control material can have secondary functions of both diluent and desiccant.

The dual agent compositions of the invention can further include a diluent. The diluent can be any solid substance serving to disperse and dilute one or more of the reactive components (actives) of the solid composition to effectively minimize their interaction in solid form. Diluents are typically inert toward the actives. A diluent may also have a secondary function as a binder, stabilizer, anticaking agent, or other function. Some diluents may also function as desiccants. In some embodiments, the diluent does not have a secondary function as a pH control material. In some embodiments, the diluent does not have a secondary function as a stabilizer. Suitable diluents include inorganic salts (e.g., NaCl, KCl, sodium carbonate, potassium carbonate, calcium sulfates, calcium phosphates, metal aluminosilicates, etc.) as well as powdered cellulose, PCC, and microcrystalline cellulose (e.g., Avicel), and the like.

A desiccant can be any solid hygroscopic material that preferentially absorbs and sequesters water vapor from the ambient surroundings, serving to protect the moisture sensitive components of the compositions. Suitable solid desiccants include activated alumina, silica gel, calcium chloride, zinc chloride, calcium sulfate (e.g., anhydrous calcium sulfate), calcium oxide, potassium carbonate, montmorillonite clay, and the like. In some embodiments, the desiccant contains anhydrous calcium sulfate (e.g., Drierite® from W. A. Hammond Company, Xenia, Ohio) or potassium carbonate. Other suitable desiccants are provided in, for example, A. P. Cohen, "Desiccants" in Kirk-Othmer Encyclopedia of Chemical Technology, 4th Ed., Vol. 7, pp. 1031-1055, Wiley, New York, 1993. In some embodiments, the desiccant does not have a secondary function as a solid pH control material. Example desiccants that do not necessarily have a secondary function as solid pH control materials include alumina, silica gel, calcium chloride, zinc chloride, calcium sulfate (e.g., anhydrous calcium sulfate), calcium oxide, montmorillonite clay, and the like.

The dual agent compositions of the invention can further contain other solid additives such as stabilizers, anticaking agents, binders, disintegrants, and glidants.

A suitable stabilizer can be any solid substance that works to extend the shelf-life of a solid dual agent composition of the invention. In some embodiments, the stabilizer is a substance that does not have a secondary function as a pH control material and/or a desiccant. Example stabilizers include inorganic salts such as alkali and alkaline earth metal salts of halides and sulfate such as sodium chloride, sodium sulfate, mixtures thereof and the like.

A suitable anticaking agent serves to help keep powders free flowing and to facilitate the ready dissolution of a powder in water. Example anticaking agents include sodium chloride, sodium carbonate, potassium carbonate, dibasic calcium phosphate (anhydrous), silicon dioxide (silica), calcium silicate, precipitated calcium carbonate (PCC), and the like.

The dual agent compositions of the invention can further include a binder. Suitable binders can include, for example, inorganic salts, wax binders, microcrystalline cellulose, and the like.

The dual agent compositions of the invention can further include a disintegrant. Suitable disintegrants can include, for example, sodium chloride, sodium sulfate, ammonium chloride, ammonium sulfate, microcrystalline cellulose, and the like.

The dual agent compositions of the invention can further include a glidant. Suitable glidants include, for example, magnesium stearate, calcium stearate, talc, colloidal silicas (e.g., Aerosil 200), carnauba wax, hydrogenated vegetable oils, mineral oil, polyethylene glycols, and the like.

Generally, the dual agent compositions of the invention can contain various ratios and amounts of the components such that the biocidal monohaloamine and/or dihaloamine agent is generated upon dissolution of the composition in water. Accordingly, the dual agent compositions of the invention can be formulated such that the molar ratio of N in the solid nitrogen source to halogen in the solid hypohalite (N/X ratio) is about 2:1 to about 0.5: 1; about 2:1 to about 0.8:1, about 1.5:1 to about 0.9:1; about 1.2:1 to about 1:1, or about 1.1:1.

The amount of solid nitrogen source individually present in the dual agent compositions of the invention can be, for example, about 1 to about 23, about 2 to about 15, about 5 to about 10, or about 8 wt%.

The amount of solid hypohalite individually present in the dual agent compositions of the invention can be, for example, about 1 to about 27, about 2 to about 20, about 5 to about 15, or about 12 wt%.

The solid hypohalite and solid nitrogen source can be considered the active ingredients of the dual agent compositions of the invention and these two ingredients together are referred to herein as "active agents" or "actives." Accordingly, the dual agent compositions of the invention can be prepared such that the actives make up about 50% or less of the total weight of the composition. For example, actives can make up about 5 to about 50%, about 5 to about 30%, about 10 to about 30%, about 15 to about 25%, or about 20% of the total weight of the composition. Compositions containing 1 to about 5% of the actives are also contemplated by the invention.

Generally, the amount of pH control material can vary widely depending on the material employed. For example, compositions of the invention can contain about 0.5 to about 25, about 1 to about 15, or about 1 to about 10 wt% of pH control material which contains a relatively strong base (e.g., hydroxide). In other embodiments, compositions of the invention can contain about 20 to about 90, about 60 to about 90, or about 80 wt% of pH control material containing a relatively weak base (e.g., carbonate). In further embodiments, pH control material can be present in compositions of the invention in amounts of about 50 to about 95, about 70 to about 90, about 75 to about 85; about 20 to about 80, about 20 to about 75, about 20 to about 30; about 55 to about 67, about 40 to about 95, about 40 to about 80, about 40 to about 60, about 50 to about 70, about 30 to about 90; about 1 to about 5, about 1 to about 3, about 80, about 60, about 25, or about 2.5 wt%.

In some embodiments, the dual agent compositions contain a further (i.e., a second) pH control material. Suitable amounts include 0 to about 55, 0 to about 40, or about 20 to about 40 wt%.

For dual agent compositions containing a desiccant, any appropriate amount can be used. In some embodiments, dual agent compositions contain 15 to about 80, about 15 to about 75, about 15 to about 30, about 15 to about 25, about 20 to about 80, about 18 to about 40, about 18 to about 30, about 50, or about 20 wt% of desiccant. In some embodiments, the desiccant can also function as a pH control material. An example dual function desiccant and pH control material is potassium carbonate.

For compositions containing other solid additives, the appropriate amount will depend on the properties and amounts of the other components. For example, when the pH control material contains a strongly reactive substance such as a strong base (e.g., hydroxide), greater amounts of the solid additives such as stabilizer and/or diluent can be employed. In compositions employing less reactive substances as the pH control material (e.g., carbonates), the pH control material can have the same diluting affect as a diluent, so less (or no) diluent or other additives may be needed. Accordingly, the dual agent compositions of the invention can contain about 0 to about 55, about 0 to about 40, about 1 to about 83, about 10 to about 90, about 20 to about 90, about 20 to about 40, about 50 to about 90, about 60 to about 90, about 70 to about 90, or about 80 wt% of other solid additives such as diluent, binder, stabilizer, and/or anti-caking agent.

For dual agent compositions containing a stabilizer, the appropriate amount will depend on the properties and the amounts of the other components. In some embodiments, dual agent compositions contain about 40 to about 75 wt %, about 50 to about 60 wt%, or about 55 wt% of stabilizer.

Anticaking agents can be present in the dual agent compositions of the invention in amounts of about 0.1 to about 50, about 0.1 to about 10, and about 0.1 to about 5 wt%.

Other components such as disintegrants and glidants can be individually present in the dual agent compositions of the invention, such as dual agent compositions suitable for preparing tablets or bars, in an amount of about 0.2 to about 5 wt%, about 0.5 to about 2 wt%, about 0.5 to about 1 wt%, or about 1 wt%.

The solid dual agent compositions of the invention can be provided as free flowing powders or in compacted form such as tablets or bars. The dual agent compositions can also be packaged in such a way as to minimize exposure to air, particularly moisture, and can be stored in a hermetically sealed package.

Certain example dual agent compositions according to the present invention consist essentially of (e.g., greater than about 95% of total weight):
a) a solid hypohalite;
b) an ammonium salt; and
c) a solid pH control material. Here, the solid pH control material can have a secondary function as a diluent, stabilizer, anti-caking agent, binder, or desiccant substantially obviating the need for these ingredients as separate components of the composition. In some embodiments, the solid pH control material is an inorganic salt of carbonate such as sodium carbonate or potassium carbonate. Further related example dual agent compositions A1, A2, A3, and A4 are provided in Table A below (percentages are provided as wt%). For each of the example dual agent compositions, the N/X ratio is about 1.5:1 to about 0.8:1.

**Table A**

| | **A1** | **A2** | **A3** | **A4** |
|---|---|---|---|---|
| solid hypohalite and ammonium salt (N/X ratio of about 1.5:1 to about 0.8:1) | about 5 to about 50% | about 10 to about 30% | about 15 to about 25% | about 20% |
| solid pH control material | about 50 to about 95% | about 70 to about 90% | about 75 to about 85% | about 80% |

An example dual agent composition that employs a desiccant contains:
a) about 5 to about 30 % by weight of said solid hypohalite and said solid nitrogen source, together;
b) about 20 to about 80 % by weight of a solid pH control material that has at least one secondary function (such as a diluent); and
c) about 15 to about 75 % by weight of desiccant.

In some embodiments, the above dual agent composition employing a desiccant contains:
a) about 15 to about 25 % by weight of solid hypohalite and solid nitrogen source, together;
b) about 55 to about 67 % by weight of a solid pH control material that has at least one secondary function(such as a diluent); and
c) about 18 to about 30 % by weight of desiccant.

In further embodiments, the above dual agent composition employing a desiccant contains:
a) about 20 % by weight of solid hypohalite and solid nitrogen source, together;
b) about 60 % by weight of a solid pH control material that has at least one secondary function (such as a diluent); and
c) about 20 % by weight of desiccant.

In some embodiments, the desiccant in the above dual agent compositions contains anhydrous calcium sulfate (e.g., Drierite). In some embodiments, the solid pH control material in the above dual agent compositions contains sodium carbonate or potassium hydrogen phthalate. The solid pH control material and/or desiccant can have a secondary function as a diluent and/or anti-caking material.

A further example dual agent composition that employs a pH control material having at least one secondary function as a diluent and at least one secondary function as a desiccant contains:
a) about 5 to about 30 % by weight of said solid hypohalite and said solid nitrogen source, together;
b) about 40 to about 95 % by weight of a pH control material having at least one secondary function as a diluent and at least one secondary function as a desiccant; and
c) 0 to about 55 % by weight of a further solid pH control material, a desiccant, a stabilizer, or combination thereof.

A further example dual agent composition that employs a pH control material having at least one secondary function as a diluent and at least one secondary function as a desiccant contains:
a) about 10 to about 30 % by weight of solid hypohalite and solid nitrogen source, together;
b) about 40 to about 80 % by weight of a pH control material having at least one secondary function as a diluent and at least one secondary function as a desiccant; and
c) 0 to about 40 % by weight of a further solid pH control material, a further desiccant, a stabilizer, or combination thereof.

In some embodiments, the above example dual agent composition having at least one secondary function as a diluent and at least one secondary function as a desiccant contains:
a) about 20 % by weight of solid hypohalite and solid nitrogen source, together;
b) about 40 to about 60 % by weight of a pH control material having at least one secondary function as a diluent and at least one secondary function as a desiccant; and
c) about 20 to about 40 % by weight of a further solid pH control material, a further desiccant, a stabilizer, or combination thereof.

In some embodiments, the solid pH control material that has at least one secondary function as a diluent and at least one secondary function as a desiccant in the above dual agent compositions contains potassium carbonate. The solid pH control material can further had a secondary function as an anti-caking material. In some embodiments, the further solid pH control material contains sodium carbonate. In some embodiments, the desiccant contains calcium sulfate. In some embodiments, the stabilizer contains sodium chloride.

An example dual agent composition that employs a desiccant and a diluent, stabilizer, anticaking agent, binder or combination thereof and is optionally in tablet or bar form, contains:
a) about 5 to about 30 % by weight of said solid hypohalite and said solid nitrogen source, together;
b) said combination of about 1 to about 5 % by weight of solid pH control material and about 1 to about 79 % by weight of diluent, stabilizer, anti-caking agent, binder, or combination thereof;
c) about 15 to about 50 % by weight of desiccant; and
d) about 0.2 to about 5 % by weight of disintegrant, glidant, or combination thereof.

In some embodiments, the above example dual agent composition that employs a desiccant and a diluent, stabilizer, anticaking agent, binder or combination thereof and is optionally in tablet or bar form contains:
a) about 15 to about 25 % by weight of said solid hypohalite and said solid nitrogen source, together;
b) said combination of about 1 to about 3 % by weight of solid pH control material and about 45 to about 55 % by weight of diluent, stabilizer, anti-caking agent, binder, or combination thereof;
c) about 15 to about 25 % by weight of desiccant; and
d) about 0.5 to about 3 % by weight of disintegrant, glidant, or combination thereof.

In some embodiments, the above example dual agent composition that employs a desiccant and a diluent, stabilizer, anticaking agent, binder or combination thereof and is optionally in tablet or bar form contains:
a) about 20 % by weight of said solid hypohalite and said solid nitrogen source, together;
b) said combination of about 1 to about 3 % by weight of solid pH control material and about 50 to about 60 % by weight of diluent, stabilizer, anti-caking agent, binder, or combination thereof;
c) about 20 % by weight of desiccant; and
d) about 0.5 to about 3 % by weight of disintegrant, glidants, or combination thereof.

In some embodiments, the above example dual agent composition that employs a desiccant and a diluent, stabilizer, anticaking agent, binder or combination thereof and is optionally in tablet or bar form contains:
a) about 20 % by weight of said solid hypohalite and said solid nitrogen source, together;
b) said combination of about 2.5 % by weight of solid pH control material and about 56.5 % by weight of diluent, stabilizer, anti-caking agent, binder, or combination thereof;
c) about 20 % by weight of desiccant; and
d) about 1 % by weight of disintegrant, glidant, or combination thereof.

In some embodiments related to the above example dual agent compositions that employ a desiccant and a diluent, the diluent contains microcrystalline cellulose or PCC, which can also serve as a binder. In further embodiments related to the above dual agent compositions, the anticaking agent contains silica. In further embodiments related to the above dual agent compositions, the composition contains a combination of diluent and anticaking agent. In further embodiments related to the above dual agent compositions, a glidant such as magnesium stearate is present. In yet further embodiments related to the above dual agent compositions, the desiccant contains anhydrous calcium sulfate. In yet further embodiments related to the above dual agent compositions, the pH control material is an inorganic salt of hydroxide, such as NaOH.

Certain example dual agent compositions that employ a stabilizer can contain:
a) about 5 to about 30 % by weight of solid hypohalite and solid nitrogen source, together;
b) about 20 to about 80 % by weight of solid pH control material that has at least one secondary function as a diluent, anti-caking agent, binder or desiccant; and
c) about 40 to about 75 % by weight of stabilizer.

Further example dual agent compositions that employ a stabilizer can contain:
a) about 10 to about 30 % by weight of solid hypohalite and solid nitrogen source, together;
b) about 20 to about 30 % by weight of solid pH control material that has at least one secondary function as a diluent, anti-caking agent, binder or desiccant; and
c) about 50 to about 60 % by weight of stabilizer.

Further example dual agent compositions that employ a stabilizer can contain:
a) about 20 % by weight of solid hypohalite and solid nitrogen source, together;
b) about 25 % by weight of solid pH control material that has at least one secondary function as a diluent, anti-caking agent, binder or desiccant; and
c) about 55 % by weight of stabilizer.

In some embodiments, the stabilizer in the above dual agent compositions contain sodium chloride. In further embodiments, the above example dual agent compositions which contain stabilizer further employ sodium carbonate as the pH control material component.

It is also understood that the present invention further encompasses mixtures or blends of two or more of the dual agent compositions described herein. In some embodiments, the mixtures can be composed of two different dual agent compositions in any weight ratio such as about 10:90, about 20:80, about 25:75, about 30:70, about 40:60, or about 50:50. In some embodiments, the mixture is composed of a first dual agent composition which generates primarily monohaloamines in water and a second dual agent composition which generates primarily dihaloamines in water.

The present invention further encompasses systems containing a combination of two or more of the dual agent compositions described herein above. The dual agent compositions of the system are typically separate from each other, each in the form of a powder, tablet, bar, or similar form. For example, the system can contain a first dual agent composition which generates monohaloamines in water and a second dual agent composition which generates dihaloamines in water. An example system is a kit containing two or more tablets or bars, each containing a different dual agent composition. *Systems Containing Single Agent Compositions*

The present invention further provides systems having a first solid single agent composition containing the solid nitrogen source, which is a solid ammonium salt having at least one N-H functionality capable of reacting with a hypohalite (as described above for dual agent compositions) and a second solid single agent composition containing the solid hypohalite (as described above for dual agent compositions). The two single agent compositions of the system are separate from each other and can form a biocidal mixture when combined together in water. In some embodiments, the system comprises a first solid single agent composition containing:
a) a solid nitrogen source, which is a solid ammonium salt having at least one N-H functionality capable of reacting with a hypohalite;
b) a solid pH control material;
and a second solid single agent composition containing:
a) a solid hypohalite.

The term "single agent composition" is meant to refer to compositions of the invention that contain one of either the solid nitrogen source or solid hypohalite, but not both.

In some embodiments, the amount of solid nitrogen source in the first solid single agent composition is about 10 to about 85, about 60 to about 70, or about 80 wt%.

In some embodiments, the amount of pH control material in the first solid single agent composition is about 1 to about 5, 15 to about 90, about 30 to about 40, or about 20 wt%.

In some embodiments, the amount of solid hypohalite in the second solid single agent composition is about 10 to about 100, about 80 to about 100, or about 100 wt%.

The first solid single agent composition can further optionally contain a desiccant, a stabilizer, an anticaking agent, a binder, a distintegrant, a glidant, a diluent, or any combination thereof. In some embodiments, the first solid single agent composition further contains a desiccant. In some embodiments, the first solid single agent composition further contains a diluent, anticaking agent, or combination thereof.

The second solid single agent composition can further optionally contain a solid pH control material, a desiccant, a stabilizer, an anticaking agent, a binder, a distintegrant, a glidant, a diluent, or any combination thereof. In some embodiments, the second solid single agent composition further contains a solid pH control material. In some embodiments, the second solid single agent composition further contains a desiccant. In some embodiments, the second solid single agent composition further contains a diluent, anticaking agent, or combination thereof.

Appropriate amounts of desiccant in single agent solid compositions include 0 to about 85, 0 to about 60, about 15 to about 30, about 20 to about 80, about 20, and about 50 wt%.

Other components such as stabilizers, anticaking agents, binders, distintegrants, glidants, diluents, and the like can be present in the single agent solid compositions of the invention in an amount of 0 to about 65 wt%.

Solid pH control materials, desiccants, stabilizers, anticaking agents, binders, distintegrants, glidants, and diluents which are suitable for the single agent compositions systems of the invention are described above in connection with the dual agent compositions. Accordingly, these ingredients can have one or more secondary functions as previously described.

In some embodiments in connection with the above system, the first solid single agent composition contains:
a) about 10 to about 80 % by weight of solid nitrogen source;
b) about 1 to about 90 % by weight of solid pH control material;
c) about 0 to about 60 % by weight of desiccant; and
d) about 0 to about 60% by weight of solid diluent, binder, anticaking agent or combination thereof.

In some embodiments in connection with the above system, the first solid single agent composition contains:
a) about 10 to about 80 % by weight of solid nitrogen source;
b) about 20 to about 90 % by weight of solid pH control material;
c) about 0 to about 60 % by weight of desiccant; and
d) about 0 to about 60% by weight of solid diluent, binder, anticaking agent or combination thereof.

In some embodiments in connection with the above system, the first solid single agent composition contains:
a) about 10 to about 40 % by weight of solid nitrogen source;
b) about 50 to about 70 % by weight of solid pH control material;
c) about 10 to about 30 % by weight of desiccant; and
d) about 0 to about 60% by weight of solid diluent, binder, anticaking agent or combination thereof.

In some embodiments, the first solid single agent composition contains:
a) about 20 % by weight of solid nitrogen source;
b) about 60% by weight of solid pH control material; and
c) about 20 % by weight of desiccant.

In some embodiments, the first solid single agent composition contains:
a) about 33 to about 50 % by weight of solid nitrogen source; and
b) about 50 to about 67% by weight of solid pH control material.

In some embodiments, the second solid single agent composition contains:
a) about 10 to about 100 % by weight of solid hypohalite;
b) about 0 to about 90 % by weight of desiccant;
c) about 0 to about 60 % by weight of solid pH control material; and
d) about 0 to about 60% by weight of solid diluent, binder, anticaking agent, or combination thereof.

In some embodiments, the second solid single agent composition contains:
a) about 20 to about 80 % by weight of solid hypohalite;
b) about 20 to about 80 % by weight of desiccant;
c) about 0 to about 60 % by weight of solid pH control material; and
d) about 0 to about 60% by weight of solid diluent, binder, anticaking agent, or combination thereof.

In some embodiments, the second solid single agent composition contains:
a) about 50 % by weight of solid hypohalite; and
b) about 50 % by weight of desiccant.

In some embodiments, the second solid single agent composition contains about 100% solid hypohalite.

The solid nitrogen source is an ammonium salt having at least one N-H functionality capable of reacting with a hypohalite. In some embodiments of the systems above, the pH control material is an inorganic salt of carbonate or inorganic salt of hydroxide. In yet further embodiments of the systems above, the desiccant contains anhydrous calcium sulfate.

In some embodiments of the systems above, the molar ratio of N in the solid nitrogen source of the first solid single agent composition to halogen in the solid hypohalite of the second solid single agent composition (N/X ratio) is about 2:1 to about 0.5:2; about 2:1 to about 0.8:1, about 1.5:1 to about 0.9:1; about 1.2:1 to about 1:1, or about 1.1:1.

In some embodiments of the systems above, one or both of the first and second solid single agent compositions can further comprise a diluent, stabilizer, anticaking agent, desiccant, binder, disintegrant, or glidant.

In some embodiments of the systems above, one or both of the first and second single agent compositions are in the form of a tablet or bar. In some embodiments one or both of the first and second solid single agent compositions is hermetically sealed in a package.

### Methods of Use

The compositions and systems described herein are useful in preparing biocidal mixtures that can be used to prevent or inhibit growth of living organisms in liquids. The biocidal mixture can be prepared by combining a composition of the invention, or the first and second compositions of a system of the invention, with an appropriate amount of water. As discussed hereinabove, the active ingredients react to form monohaloamines and/or diahaloamines, depending on the pH control material used, which are among the biocidal agents of the resulting biocidal mixture. Accordingly, the term "biocidal mixture" refers to an aqueous mixture containing a composition of the invention, or both first and second compositions of a system of the invention, where the mixture also contains monohaloamines (e.g., chloramine) and/or dihaloamines (e.g., dichloramine).

The amount of water which is combined with the compositions of the invention to form the biocidal mixtures can vary, but is typically sufficient to at least partially dissolve the actives such that formation of one or more haloamines can occur. In some embodiments, the amount of water combined with the compositions described herein results in a peak haloamine concentration of about 10 to about 10,000, about 100 to about 10,000, about 500 to about 5000, about 500 to about 3000, or about 600 to about 2000 ppm. In some embodiments, the biocidal mixture has a haloamine concentration of about 100 to about 5000 ppm, about 500 to about 5000 ppm, or about 600 to about 2000 ppm. In further embodiments, the weight ratio of water to the total of said first and second solid compositions of systems of the invention is about 1000:1 to about 5:1, about 500:1 to about 10:1, about 200:1 to about 10:1; about 175:1 to about 40:1, or about 90:1 to about 70:1. In some embodiments, the weight ratio of water to solid composition is about 1000:1 to about 5:1, about 500:1 to about 10:1, about 200:1 to about 10:1; about 175:1 to about 40:1, or about 90:1 to about 70:1.

For single agent systems of the invention, the mode of addition of the first and second single agent solid compositions to water can be concurrent or consecutive. For consecutive addition, the two compositions can be added into water in any order. In some embodiments, the first single agent solid composition containing the nitrogen source is added prior to the second single agent solid composition. In other embodiments, the second single agent solid composition containing the solid hypohalite is added prior to the second single agent solid composition.

As used herein, the term "water" refers to any aqueous-based liquid. Accordingly, the term "water" includes substantially pure water as well as aqueous mixtures, solutions, and suspensions.

The biocidal mixture can be used for the treatment of liquids to prevent or inhibit growth of living organisms in the liquid. Accordingly, the present invention provides methods of preventing or inhibiting the growth of living organisms in a liquid by preparing a biocidal mixture as described above and treating the liquid with the biocidal mixture. Treatment typically includes combining the biocidal mixture directly with the liquid to be treated. The combining can be carried out batchwise or by continuous flow mixing. The combining of the biocidal mixture and liquid can be carried out such that the final combined liquids results in a peak haloamine concentration of about 4 to about 20 ppm.

Suitable liquids for treatment include any liquid that contains or might contain undesirable living organisms such as bacteria, protozoa, microscopic multicellular organisms, algae, fungus, and the like. In addition to swimming pool water and drinking water, the treatment methods of the invention can also be applicable to liquids generated by various industrial processes including pulp and paper mill processes. Pulp and paper mills often suffer from microbiological growth, resulting in free-floating (planktonic) cells, biofilms, and slime. Accordingly, the biocidal mixtures of the invention are effective for treatment of mill water, waster water, and other aqueous effluents, and can be combined with other oxidizing and non-oxidizing biocides to control growth of living organisms.

Unless otherwise indicated, all percentage values herein are calculated by weight.

The term "contain" as used herein in connection with the compositions of the invention is meant to refer to compositions that include the recited components and optionally include further components. The term "consist essentially of' as used herein in connection with the compositions of the invention is meant to refer to compositions that are primarily composed of the recited components, and any other non-recited components make up less than about 5 wt% of the total composition. Any composition recited herein containing certain recited components is also meant to include compositions consisting essentially of the recited components.

In order that the invention disclosed herein may be more efficiently understood, examples are provided below. It should be understood that these examples are for illustrative purposes only and are not to be construed as limiting the invention in any manner.

### EXAMPLES

Standard laboratory practice was used for sample preparation and for the various tests. Typically, 5.8 g of sample was added to 491.6 g of water, or 0.58 g of sample in 49.16 g water. The solution was stirred to complete dissolution. 30 mL of this solution were poured through a Coming 0.45 µm syringe filter. The filtrate was then analyzed. The major tests were the Hach (for free and total chlorines) and UV. The Hach values (e.g., levels of MCA) were calculated as the difference between two assays: total and free chlorine, which were determined using a portable UV meter (Hach Pocket Colorimeter II™) and the test packs supplied by Hach. The UV spectra were obtained on a digital UV spectrophotometer. Monochloramine gives a maximum at 245 nm, and dichloramine at 206 and 295 nm (T. W. Trofe, G. W. Inman, J. D. Johnson, Environ. Sci. Technol., 14, 544 (1980)).

### Example 1: Comparative and Example Compositions

Calcium hypochlorite and ammonium chloride, both in powder form, were combined with solid NaOH (pH control material) according to Table 1 below (Ex. 1c and 1d). One of the solid compositions further contained 80 wt% of a diluent (85 wt% lactose and 15 wt% pregelatinized starch) and was compressed into a tablet form. Comparative solutions (2200 ppm) were also prepared (Ex. 1a and Ib). The level of monochloramine (MCA) was measured for each experiment after either combining the appropriate solutions (Ex. 1a and 1b) or dissolving the solid compositions in water (Ex. 1c and 1d). Monochloramine (MCA) level was measured, using a Hach Pocket Colorimeter II™, as the difference of total and free chlorine which is reported below in Table 1 as the Hach value. Example 1c gave a slightly lower Hach value immediately after dissolution in water which may be due to instability of the solid mixture evidenced by the observation that after one day, the Hach value was more than 30% lower. The tablet (Ex. 1d) gave a similar Hach value to the solution formulations.

**Table 1. Comparison of solution and solid formulations (2200 ppm; pH 10)**

| Ex | N source | Hypohalite | State | Diluent | Hach |
|---|---|---|---|---|---|
| 1a | NH₄Cl conc.=2200 ppm vol. = 25 mL | NaOCl conc.=2200 ppm (pH adjusted to 10.5 with NaOH) vol.=23 mL | Solution Final pH = 9.61 | No | 770 ppm |
| 1b | NH₄Cl conc.=2200 ppm vol. = 25 mL | Ca(OCl)₂ conc.=2200 ppm (pH adjusted to 10.5 with NaOH) vol.=23 mL | Solution Final pH = 9.33 | No | 730 ppm |
| 1c | NH₄Cl 55 mg | Ca(OCl)₂ 50.6 mg | powder mix, with NaOH (9.78 mg). Dissolved in 49.16 mL of water. pH=9.22 | No | 685 ppm |
| 1d | NH₄Cl 55 mg | Ca(OCl)₂ 53.5 mg | dry tablet, with NaOH (10.8 mg) and binder (467.7 mg; 85% lactose, 15% pregel starch). Dissolved in 49.16 mL of water. pH>9 | Yes | 790 ppm |

### Example 2: Further Example Compositions

Additional dual agent compositions containing various diluents and other components were also tested. Each composition was pressed into a tablet prior to dissolution in water. MCA levels were measured as described in Example 1d and reported in Table 2 below. Each of the compositions contained 80 wt% diluent and/or other additives (475 mg), 18 wt% actives (calcium hypochlorite 50.6 mg, ammonium chloride 55.0 mg), and 2 % NaOH (13 mg). Each tablet was then dissolved in 50 mL of water. Each of the compositions produced acceptable levels of MCA, the presence of which was confirmed by UV at 245 nm.

**Table 2. Diluent/additives variation**

| Example | Diluent/Additives | pH | Dissolution Time (min) | MCA Level (Hach, ppm) |
|---|---|---|---|---|
| 2a | 15% starch, 85% lactose | 9.8 | 2½ | 600 |
| 2b | 15% starch, 84.5% lactose, 0.5% magnesium stearate | 10.1 | 1% | 645 |
| 2c | 15% starch, 84.25% lactose, 0.5% magnesium stearate, 0.25% Aerosil 200 | 10.0 | 1 | 610 |
| 2d | 15% starch, 80% lactose, 5% sucrose | 9.9 | 1¼ | 670 |
| 2e | 10% PVP, 15% starch, 75% lactose | 9.9 | 1 | 605 |

In addition, variations in the diluent/additives level were tested. From accumulated data, a diluent/additives level of > 60 wt% was needed for these particular formulations. Even better results were obtained at 80 wt%.

The above compositions formed strong tablets (and could function as powder mixtures); however, they did not have long-term shelf stability believed to be caused by reaction between the hypochlorite and the diluent/additives. A formula like in Example 2d decreased in Hach value by 50% in 11 days. More stable formulations were explored below.

### Example 3: Further Dual Agent Example Compositions

Solid powder compositions containing inorganic salt diluents and additives (lacking oxidizable functional groups) were tested. Tables 3-1 and 3-2 below provide data in connection with the stability of compositions containing about 20 wt% ammonium sulfate and calcium hypochlorite (1.8:1.0 molar ratio; total weight of 105.6 mg)) and 80 wt% sodium carbonate (474.4 mg) together dissolved in 50 mL of water. The pH was kept above 11.0 and no NaOH was used.

Each of the 5 samples of Table 3-1 was separately sealed in a vial, which remained unopened until assayed for pH and Hach value. Under the experimental conditions, the formulation appeared stable.

**Table 3-1. MCA biocide composition with sodium carbonate (sealed, stringent preparation and storage conditions)**

| Example | Elapsed time | pH | Hach |
|---|---|---|---|
| 3a | 0.25 h | 11.1 | 600 |
| 3b | 16 h | 11.1 | 625 |
| 3c | 7 d | 11.1 | 610 |
| 3d | 14 d | 11.1 | 620 |
| 3e | 32 d | 11.1 | 590 |

In contrast with the results of Table 3-1, samples prepared using commercial raw materials under less stringent conditions (e.g., single samples were repeatedly opened for testing), resulted in more variability and less stability. Accordingly, compositions appeared to benefit from fresh (not aged) starting materials and protection from air.

An effort was also made to optimize the level of MCA formed (and the Hach value). This was done by varying the molar ratio of ammonium sulfate and calcium hypochlorite. The result (again for powders) is shown in Table 3-2.

**Table 3-2. Hach value as a function of molar ratio of ammonium sulfate and calcium hypochlorite.**

| Example | Formulation | AmSO₄:Ca hypo | Elapsed time | pH | Hach |
|---|---|---|---|---|---|
| 3f | 80% Na₂CO₃ | 1.25 : 1.00 | 0.25 h | 11.3 | 770 |
| 3g | 20% active | 1.10 : 1.00 | 0.25 h | 11.4 | 850 |
| 3h | | 1.05 : 1:00 | 0.25 h | 11.4 | 815 |

In further experiments, the sodium carbonate in the compositions of Table 3-1 was replaced with sodium acetate, also acting as both diluent and pH control agent. Data are provided below in Table 3-3 These compositions were more difficult to handle because the sodium acetate was hygroscopic.

**Table 3-3. MCA biocide composition with sodium acetate**

| Ex. | Formulation | Elapsed time | pH | Hach |
|---|---|---|---|---|
| 3i | 80% sodium acetate [474 mg] | 0.25 h | 8.95 | 605 |
| 3j | 20% active [(NH₄)₂SO₄, 55 mg; Ca(OCl)₂, 51 mg] | 8 d | 8.84 | 580 |
| 3k | Total 580 mg dissolved in 50 mL water | 18 d | 8.87 | 610 |
| 31 | | 28 d | 8.69 | 525 |

### Example 4: Dual Agent Powder Mixtures Containing Desiccants

Four powder compositions were prepared as shown in Table 4-1. The first composition (4a) consisted of four components: ammonium sulfate, calcium hypochlorite, sodium carbonate and Drierite. The second composition (4b) was the same as the first but contained ammonium chloride instead of ammonium sulfate. The ammonium chloride level was not optimized in the 4b sample, and this was likely the reason for the lower Hach values. The third composition (4c) contained 10% sodium chloride, which was found to have some stabilizing action. The fourth composition (4d) used NaOH and precipitated calcium carbonate (PCC) instead of sodium carbonate. In all four cases, the Hach values remained stable for six weeks.

**Table 4-1. MCA biocide compositions with anhydrous Ca sulfate**

| Ex. | Formulation | Elapsed time | pH | Hach |
|---|---|---|---|---|
| 4a | 60% Na₂CO₃ [30.0 g] | 0.5 h | 11.3 | 720 |
| | 20% Drierite [10.0 g] | 15 h | 11.5 | 795 |
| | 20% active [(NH₄)₂SO₄, 3.978 g; Ca(OCl)₂, 6.022 g] Total sample 50 g 5.8 g dissolved in 491.6 g water | 43 d | 11.5 | 820 |
| 4b | 60% Na₂CO₃ [30.0 g] | 3 h | 10.5 | 670 |
| | 20% Drierite [10.0 g] | 15 d | 10.9 | 645 |
| | 20% active [NH₄Cl, 5.2 g; Ca(OCl)₂, 4.8 g] Total sample 50 g 5.8 g dissolved in 491.6 g water | 47 d | 10.7 | 640 |
| 4c | 45% Na₂CO₃ [261 mg] | 0.5 h | 11.0 | 835 |
| | 10% NaCl [58 mg] | 15 d | 11.3 | 840 |
| | 25% Drierite [145 mg] 20% active [(NH₄)₂SO₄, 46 mg; Ca(OCl)₂, 70 mg] 580 mg dissolved in 49.16 g water | 43 d | 11.3 | 825 |
| 4d | 57.5% PCC [335.5 mg] | 3 h | 11.9 | 940 |
| | 2.5% NaOH [14.5 mg] | 15 d | 11.1 | 890 |
| | 20% Drierite [116 mg] 20% active [(NH₄)₂SO₄, 46.1 mg; Ca(OCl)₂, 69.9 mg] 580 mg dissolved in 49.16 g water | 47 d | 11.9 | 875 |

In addition to the basic formulation with the four chemicals (Example 4a), talc or PCC (up to at least 20%) was added without hurting the stability.

It was found that insoluble anhydrous calcium sulfate (U.S. Gypsum Company (USG), Chicago, Illinois) was less effective than Drierite as a desiccant. The insoluble anhydrite appeared to have a more limited capacity for water absorption and was shown to be effective for only up to about two weeks (Table 4-2).

**Table 4-2. MCA biocide compositions with anhydrous Ca sulfate (USG)**

| Ex. | Formulation | Elapsed time | pH | Hach |
|---|---|---|---|---|
| 4e | 60% Na₂CO₃ [30.0 g] | 3 h | 11.1 | 740 |
| | 20% USG calcium sulfate [10.0 g] | 14 d | 11.1 | 855 |
| | 20% active [(NH₄)₂SO₄, 3.978 g; Ca(OCl)₂, 6.022 g | 48 d | 10.5 | 140 |
| | Total sample 50 g | | | |
| | 5.8 g dissolved in 491.6 g water | | | |

Another appropriate desiccant was found to be potassium carbonate (Table 4-3). Note that potassium carbonate has the remarkable advantage of serving five functions at once: diluent, anti-caking, pH control, stabilizer, and desiccant.

**Table 4-3. MCA biocide compositions with notassium carbonate**

| Ex | Formulation | Elapsed time | pH | Hach |
|---|---|---|---|---|
| 4f | 40% K₂CO₃ [20.0 g] | 0.5 h | 10.7 | 840 |
| | 40% USG calcium sulfate [20.0 g] | 14 d | 10.4 | 810 |
| | 20% active [(NH₄)₂SO₄, 3.978 g; Ca(OCl)₂, 6.022 g] | 42 d | 10.5 | 850 |
| | Total sample 50 g | | | |
| | 5.8 g dissolved in 491.6 g water | | | |
| 4g | 60% K₂CO₃ [30.0 g] | 0.5 h | 11.2 | 910 |
| | 20% sodium chloride [10.0 g] | 14 d | 11.1 | 780 |
| | 20% active [(NH₄)₂SO₄, 3.978 g; Ca(OCl)₂, 6.022 g] | 42 d | 11.1 | 855 |
| | Total sample 50 g | | | |
| | 5.8 g dissolved in 491.6 g water | | | |

Instead of Drierite and potassium carbonate, pre-dried calcium oxide and Montmorillonite K10 clay were also found to give good stable powder compositions (Table 4-4). Pre-dried silica gel gave more moderate results. In all cases, pre-drying of the desiccant was found to be beneficial. A typical pre-drying process entailed heating in air for 3 hours at high temperatures (e.g., above 200°C).

**Table 4-4. MCA biocide compositions with sodium carbonate and other desiccants**

| Ex | Formulation | Elapsed time | pH | Hach |
|---|---|---|---|---|
| 4h | 60% Na₂CO₃ [348 mg] | 3 h | 11.8 | 885 |
| | 20% pre-dried Ca oxide [116 mg] | 16 d | 11.7 | 820 |
| | 20% active [(NH₄)₂SO₄, 46.2 mg; Ca(OCl)₂, 69.8 mg] | 42 d | 12.3 | 845 |
| | 580 mg dissolved in 49.16 g water | | | |
| 4i | 60% Na₂CO₃ [348 mg] | 3 h | 11.0 | 895 |
| | 20% pre-dried Montmorillonite [116mg] | 16 d | 10.4 | 815 |
| | 20% active [(NH₄)₂SO₄, 46.2 mg; Ca(OCl)₂, 69.8 mg] | 42 d | 11.0 | 825 |
| | 580 mg dissolved in 49.16 g water | | | |
| 4j | 57.5% PCC [345.0 mg] | 3 h | 11.7 | 875 |
| | 20% pre-dried silica gel [120 mg] | 14 d | 10.7 | 730 |
| | 2.5% NaOH [15 mg] | 42 d | 11.2 | 700 |
| | 20% active [(NH₄)₂SO₄, 47.7 mg; Ca(OCl)₂, 72.3 mg] | | | |
| | 600 mg dissolved in 49.16 g water | | | |

### Example 5: Dual Agent Powder Compositions Containing a Stabilizer

Two tables are shown for example compositions containing a stabilizer. According to Table 5-1, the compositions contained ammonium sulfate and calcium hypochlorite (as the active component), and sodium carbonate (as both diluent and pH control material), and sodium chloride (as stabilizer). The formulation was shown to be stable.

**Table 5-1. MCA biocide compositions with a stabilizer**

| Ex | Formulation | Elapsed time | pH | Hach |
|---|---|---|---|---|
| 5a | 25% Na₂CO₃ [12.5 g] | 0.5 h | 10.8 | 660 |
| | 55% sodium chloride [27.5 g] | 15 d | 10.8 | 710 |
| | 20% active [(NH₄)₂SO₄, 3.978 g; Ca(OCl)₂, 6.022 g] | 42 d | 10.7 | 630 |
| | Total sample 50 g | | | |
| | 5.8 g dissolved in 491.6 g water | | | |

As shown in Example 5b (see Table 5-2), the level of sodium chloride was lower than in the compositions of Table 5-1, but a stabilizing effect was still observed (though to a lesser extent). A mixture of sodium chloride and sodium sulfate also resulted in a stabilizing effect (Ex. 5c) but to a lesser extent than the composition of Table 5-1.

**Table 5-2. MCA biocide compositions with a stabilizer**

| Ex | Formulation | Elapsed time | pH | Hach |
|---|---|---|---|---|
| 5b | 60% Na₂CO₃ [30.0 g] | 0.5 h | 11.1 | 695 |
| | 20% sodium chloride [10.0 g] | 14 d | 11.2 | 675 |
| | 20% active [(NH₄)₂SO₄, 3.978 g; Ca(OCl)₂, 6.022 g] | 42 d | 10.9 | 540 |
| | Total sample 50 g. | | | |
| | 5.8 g dissolved in 491.6 g water | | | |
| 5c | 30% Na₂CO₃ [15.0g] | 0.5 h | 11.0 | 670 |
| | 40% sodium sulfate [20.0 g] | 14 d | 11.0 | 705 |
| | 10% sodium chloride [5.0 g] | 42 d | 10.7 | 555 |
| | 20% active [(NH₄)₂SO₄, 3.978 g; Ca(OCl)₂, 6.022 g] | | | |
| | Total sample 50 g. | | | |
| | 5.8 g dissolved in 491.6 g water | | | |

### Example 6: Single Agent Composition Systems

Data for a single agent example system having two separate compositions (one containing the ammonium salt - Part A, and the other containing the hypochlorite - Part B) are shown in Table 6-1. The two compositions were poured simultaneously into water and dissolved at room temperature. The time study (according to the Hach values) indicated that the compositions were stable.

**Table 6-1. Single agent powder mix for MCA biocide.**

| Example | Formulation | | Elapsed time | pH | Hach |
|---|---|---|---|---|---|
| 6a | Part A: | 0.464 g (NH₄)₂SO₄ | 0.5 h | 10.9 | 885 |
| | | 1.392 g Na₂CO₃ | | | |
| | | 0.464 g Drierite | 14 d | 11.3 | 885 |
| | Part B. | 0.696 g Ca(OCl)₂ | | | |
| | | 0.696 g Drierite | 41 d | 11.0 | 845 |
| | Both ad ded to 491.6 g water for assay | | | | |

If Part B is kept substantially free of moisture, a stable formulation can be made without desiccant. An example is shown in Table 6-2.

**Table 6-2. Single agent powder mix for MCA biocide.**

| Example | Formulation | | Elapsed time | pH | Hach |
|---|---|---|---|---|---|
| 6b | Part A: | 0.464 g(NH₄)₂SO₄ | 0.5 h | 11.4 | 790 |
| | | 3.5 g Na₂CO₃ | 14 d | 11.3 | 790 |
| | Part B. | 0.696 g Ca(OCl)₂ | 42 d | 11.2 | 790 |
| | Both added to 491.6 g water for assay | | | | |

### Example 7: Tablet Formulations

An example of dual agent tablet composition is provided in Table 7-1. All the ingredients were made into one single tablet. The shelf life was determined to be about 1 month.

**Table 7-1. Solid MCA biocide in a single tablet formulation**

| Ex | Formulation | Elapsed time | pH | Hach |
|---|---|---|---|---|
| 7a | 20% active [(NH₄)₂SO₄, 47.7 mg; Ca(OCl)₂, 72.3 mg] | 3 h | 12.1 | 840 |
| | 2.5% NaOH [15.0 g] | | | |
| | 20% Drierite [120.0 g] | 14 d | 11.6 | 796 |
| | 56.5% Avicel [339.0 g] | | | |
| | 1.0% Mg stearate [6.0 g] 600 mg dissolved in 49.16 g water | 44 d | 11.2 | 655 |

The single agent composition system can be made in the form of tablets as well. An example is provided in Table 7-2. This system is more stable.

**Table 7-2. Solid MCA biocide in a two-tablet formulation.**

| Example | Formulation | | Elapsed time | pH | Hach |
|---|---|---|---|---|---|
| 7b | Tablet A: | 47.7 mg (NH₄)₂SO₄ | 2.5 h | 12.1 | 905 |
| | | 60.0 mg Drierite | | | |
| | | 117.0 mg PCC | 14 d | 12.2 | 865 |
| | | 1.5 mg Aerosil 200 | | | |
| | | 1.5 mg Silica | 43 d | 11.8 | 845 |
| | | 15.0 mg NaOH | | | |
| | Tablet B. | 72.3 mg Ca(OCl)₂ | | | |
| | | 60.0 mg Drierite | | | |
| | | 117.0 mg PCC | | | |
| | | 1.5 mg Aerosil 200 | | | |
| | | 1.5 mg Silica | | | |
| | Both dissolved in 49.16 g water for assay | | | | |

### Example 8: DCA-Generating Powder Composition

Data for an example composition that generated dichloroamine (DCA) upon dissolution in water is provided below in Table 8-1. The pH control material that was used was potassium hydrogen phthalate (KHP) which dissolved slowly in water and buffered the solution at pH 4.3 allowing sufficient time for the initial formation of MCA at higher pH and then the subsequent conversion to DCA as pH was lowered to 4.3. The presence of DCA was detected as evidenced by UV and Hach. The compositions also showed long-term stability.

**Table 8-1. Solid powder dual agent composition for generating DCA biocide**

| Ex | Formulation | Elapsed time | pH | Hach |
|---|---|---|---|---|
| 8a | 20% Drierite [120 mg] | 0.15 h | 4.3 | 580 |
| | 60% potassium hydrogen phthalate [360mg] | | | |
| | 20% active [(NH₄)₂SO₄, 47.7 mg; Ca(OCl)₂, 72.3 mg] | 14 d | 4.4 | 640 |
| | 600 mg dissolved in 49.16 g water | | | |
| | | 36 d | 4.4 | 640 |

A further pH control system that can be used for generating DCA is monobasic sodium phosphate (Table 8-2). The overall Hach value is lower, but the formulation is stable.

**Table 8-2. Solid powder dual agent composition for generating DCA biocide**

| Ex | Formulation | Elapsed time | pH | Hach |
|---|---|---|---|---|
| 8b | 20% Drierite [120 mg] | 1 h | 4.5 | 320 |
| | 60% NaH₂PO₄ [360 mg] | | | |
| | 20% active [(NH₄)₂SO_{4,} 47.7 mg; Ca(OCl)₂, 72.3 mg] | 18 d | 4.7 | 370 |
| | 600 mg dissolved in 49.16 g water | | | |
| | | 42 d | 4.9 | 405 |

## Claims

1. A solid dual agent composition comprising:
a) a solid hypohalite;
b) a solid nitrogen source, which is a solid ammonium salt having at least one N-H functionality capable of reacting with a hypohalite; and
c) a component which is either:
i) a solid pH control material that optionally has at least one secondary function as a diluent which is inert toward the reactive components of the solid dual agent composition, stabilizer, anti-caking agent, binder or desiccant; or
ii) a combination of a solid pH control material and a diluent which is inert toward the reactive components of the solid dual agent composition, stabilizer, anti-caking agent, binder, desiccant, or combination thereof; wherein said dual agent composition forms a biocidal mixture when combined with water.

2. The composition of claim 1 wherein said solid hypohalite is calcium hypochlorite.

3. The composition of claim 1 wherein said solid nitrogen source is an ammonium salt.

4. The composition of claim 1 wherein said solid pH control material or said solid pH control material that has at least one secondary function maintains the biocidal mixture at a pH of about 8 to about 13.

5. The composition of claim 1 wherein said solid pH control material that has at least one secondary function is an inorganic salt of carbonate, phosphate, acetate, hydrogen phthalate, or hydroxide.

6. The composition of claim 1 wherein said solid pH control material has no secondary function as a diluent which is inert toward the reactive components of the solid dual agent composition or stabilizer.

7. The composition of claim 1 wherein the molar ratio of N in the solid nitrogen source to halogen in the solid hypohalite is about 2:1 to about 0.5:1.

8. The composition of claim 1 wherein said solid hypohalite and said solid nitrogen source together comprise about 5 to about 30 % by weight of the total composition.

9. The composition of claim 1 further comprising a desiccant.

10. The composition of claim 1 further comprising a stabilizer.

11. The composition of claim 10 wherein the stabilizer is sodium chloride.

12. The composition of claim 1 further comprising a diluent which is inert toward the reactive components of the solid dual agent composition, anti-caking agent, or combination thereof.

13. The composition of claim 12 wherein said diluent, anti-caking agent, or combination thereof comprises an inorganic salt.

14. The composition of claim 1 consisting essentially of:
a) a solid hypohalite;
b) an ammonium salt; and
c) a solid pH control material that has at least one secondary function as a diluent which is inert toward the reactive components of the solid dual agent composition, stabilizer, anti-caking agent, binder or desiccant.

15. The composition of claim 14 wherein said solid hypohalite and said ammonium salt together comprise about 5 to about 30 % by weight of the total composition.

16. The composition of claim 14 wherein said solid pH control material comprises about 20 to about 90 % by weight of the total composition.

17. The composition of claim 14 wherein said solid pH control material comprises an inorganic salt of carbonate.

18. The composition of claim 1 comprising:
a) about 5 to about 30 % by weight of said solid hypohalite and said solid nitrogen source, together;
b) about 20 to about 80 % by weight of said solid pH control material that has at least one secondary function; and
c) about 15 to about 75 % by weight of desiccant.

19. The composition of claim 1 comprising:
a) about 5 to about 30 % by weight of said solid hypohalite and said solid nitrogen source, together;
b) about 40 to about 95 % by weight of said pH control material having at least one secondary function as a diluent which is inert toward the reactive components of the solid dual agent composition and at least one secondary function as a desiccant; and
c) 0 to about 55 % by weight of a further solid pH control material, a desiccant, a stabilizer, or combination thereof.

20. The composition of claim 1 comprising:
a) about 5 to about 30 % by weight of said solid hypohalite and said solid nitrogen source, together;
b) said combination of about 1 to about 5 % by weight of solid pH control material and about 1 to about 79 % by weight of diluent which is inert toward the reactive components of the solid dual agent composition, stabilizer, anti-caking agent, binder, or combination thereof;
c) about 15 to about 50 % by weight of desiccant; and
d) about 0.2 to about 5 % by weight of disintegrant, glidant, or combination thereof.

21. The composition of claim 1 comprising:
a) about 5 to about 30 % by weight of solid hypohalite and solid nitrogen source, together;
b) about 20 to about 80 % by weight of solid pH control material that has at least one secondary function as a diluent which is inert toward the reactive components of the solid dual agent composition, anti-caking agent, binder or desiccant; and
c) about 40 to about 75 % by weight of stabilizer.

22. The composition of claim 21 wherein said stabilizer comprises sodium chloride.

23. A system comprising a first solid single agent composition and a second solid single agent composition separate from said first solid single agent composition, wherein said first solid single agent composition comprises:
a) a solid nitrogen source which is a solid ammonium salt having at least one N-H functionality capable of reacting with a hypohalite;
b) a pH control material;
and wherein said second solid single agent composition comprises:
a) a solid hypohalite;
wherein said first solid single agent composition and said second solid single agent composition together form a biocidal mixture when combined with water.

24. The system of claim 23 wherein said first solid single agent composition comprises:
a) about 10 to about 80 % by weight of said solid nitrogen source;
b) about 1 to about 90 % by weight of said solid pH control material;
c) about 0 to about 60 % by weight of a desiccant; and
d) about 0 to about 60 % by weight of a solid diluent which is inert toward the reactive components of the composition, binder, anti-caking agent, or combination thereof.

25. The system of claim 23 wherein said second solid single agent composition comprises:
a) about 10 to about 100 % by weight of said solid hypohalite; and
b) about 0 to about 90 % by weight of said desiccant
c) about 0 to about 60 % by weight of a solid pH control material; and
d) about 0 to about 60 % by weight of a solid diluent which is inert toward the reactive components of the composition, binder, anti-caking agent, or combination thereof.

26. The system of claim 23 wherein, said solid nitrogen source is an ammonium salt.

27. The system of claim 23 wherein said pH control material comprises an inorganic salt of carbonate or inorganic salt of hydroxide.

28. The system of claim 23 wherein said first solid single agent composition further comprises a desiccant.

29. The system of claim 28 wherein said desiccant comprises anhydrous calcium sulfate.

30. A method of preparing a biocidal mixture comprising combining the composition of claim 1 with an amount of water suitable for producing a peak haloamine concentration of about 10 to about 10,000 ppm.

31. The method of claim 30 wherein the weight ratio of water to composition is about 1000:1 to about 5:1.

32. A method of preparing a biocidal mixture comprising combining said first and second solid single agent compositions of the system of claim 23 with an amount of water suitable for producing a peak haloamine concentration of about 10 to about 10,000 ppm.

33. The method of claim 32 wherein the weight ratio of water to the total of said first and second solid single agent compositions is about 1000:1 to about 5:1.

34. A method of preventing or inhibiting the growth of living organisms in a liquid comprising:
a) preparing a biocidal mixture according to claim 30; and
b) treating said liquid with said biocidal mixture.

35. A method of preventing or inhibiting the growth of living organisms in a liquid comprising:
a) preparing a biocidal mixture according to claim 32; and
b) treating said liquid with said biocidal mixture.

## Patentansprüche

1. Feste Zusammensetzung mit zwei Mitteln umfassend:
a) ein festes Hypohalogenit,
b) eine feste Stickstoffquelle, die ein festes Ammoniumsalz mit mindestens einer N-H-Funktionalität ist, die geeignet ist, mit einem Hypohalogenit zu reagieren, und
c) eine Komponente, die entweder
i) ein festes pH-Regulierungsmatial ist, das gegebenenfalls mindestens eine sekundäre Funktion als Verdünnungsmittel, das gegenüber den reaktiven Komponenten der festen Zusammensetzung mit zwei Mitteln inert ist, Stabilisator, Antiklumpmittel, Bindemittel oder Trockenmittel aufweist, oder
ii) eine Kombination aus einem festen pH-Regulierungsmaterial und einem Verdünnungsmittel, das gegenüber den reaktiven Komponenten der festen Zusammensetzung mit zwei Mitteln inert ist, einem Stabilisator, einem Antiklumpmittel, einem Bindemittel, einem Trockenmittel oder einer Kombination davon, wobei die feste Zusammensetzung mit zwei Mitteln eine biozide Mischung bildet, wenn sie mit Wasser kombiniert wird.

2. Zusammensetzung gemäß Anspruch 1, wobei das feste Hypohalogenit Calciumhypochlorit ist.

3. Zusammensetzung gemäß Anspruch 1, wobei die feste Stickstoffquelle ein Ammoniumsalz ist.

4. Zusammensetzung gemäß Anspruch 1, wobei das feste pH-Regulierungsmaterial oder das feste pH-Regulierungsmaterial, das mindestens eine sekundäre Funktion aufweist, die biozide Mischung bei einem pH-Wert von etwa 8 bis etwa 13 aufrechterhält.

5. Zusammensetzung gemäß Anspruch 1, wobei das feste pH-Regulierungsmaterial, das mindestens eine sekundäre Funktion aufweist, ein anorganisches Salz eines Carbonats, Phosphats, Acetats, Hydrogenphthalats oder Hydroxids ist.

6. Zusammensetzung gemäß Anspruch 1, wobei das feste pH-Regulierungsmaterial keine sekundäre Funktion als Verdünnungsmittel, das gegenüber den reaktiven Komponenten der festen Zusammensetzung mit zwei Mitteln inert ist, oder Stabilisator aufweist.

7. Zusammensetzung gemäß Anspruch 1, wobei das Molverhältnis von N in der Stickstoffquelle zu Halogen in dem festen Hypohalogenit etwa 2:1 bis etwa 0,5:1 beträgt.

8. Zusammensetzung gemäß Anspruch 1, wobei das feste Hypohalogenit und die feste Stickstoffquelle zusammen etwa 5 bis etwa 30 Gew.% der gesamten Zusammensetzung umfassen.

9. Zusammensetzung gemäß Anspruch 1, ferner umfassend ein Trockenmittel.

10. Zusammensetzung gemäß Anspruch 1, ferner umfassend einen Stabilisator.

11. Zusammensetzung gemäß Anspruch 10, wobei der Stabilisator Natriumchlorid ist.

12. Zusammensetzung gemäß Anspruch 1, ferner umfassend ein Verdünnungsmittel, das gegenüber den reaktiven Komponenten der festen Zusammensetzung mit zwei Mitteln inert ist, ein Antiklumpmittel oder eine Kombination davon.

13. Zusammensetzung gemäß Anspruch 12, wobei das Verdünnungsmittel, Antiklumpmittel oder eine Kombination davon ein anorganisches Salz umfasst.

14. Zusammensetzung gemäß Anspruch 1, die im Wesentlichen aus Folgendem besteht:
a) ein festes Hypohalogenit,
b) ein Ammoniumsalz und
c) ein festes pH-Regulierungsmaterial, das mindestens eine sekundäre Funktion als Verdünnungsmittel, das gegenüber den reaktiven Komponenten der festen Zusammensetzung mit zwei Mitteln inert ist, Stabilisator, Antiklumpmittel, Bindemittel oder Trockenmittel aufweist.

15. Zusammensetzung gemäß Anspruch 14, wobei das feste Hypohalogenit und das Ammoniumsalz zusammen etwa 5 bis etwa 30 Gew.% der gesamten Zusammensetzung umfassen.

16. Zusammensetzung gemäß Anspruch 14, wobei das feste pH-Regulierungsmaterial etwa 20 bis etwa 90 Gew.% der gesamten Zusammensetzung umfasst.

17. Zusammensetzung gemäß Anspruch 14, wobei das feste pH-Regulierungsmaterial ein anorganisches Salz eines Carbonats umfasst.

18. Zusammensetzung gemäß Anspruch 1, umfassend:
a) zusammen etwa 5 bis etwa 30 Gew.&% des festen Hypohalogenits und der festen Stickstoffquelle,
b) etwa 20 bis etwa 80 Gew.% des festen pH-Regulierungsmaterials, das mindestens eine sekundäre Funktion aufweist, und
c) etwa 15 bis etwa 75 Gew.% eines Trockenmittels.

19. Zusammensetzung gemäß Anspruch 1, umfassend:
a) zusammen etwa 5 bis etwa 30 Gew.% des festen Hypohalogenits und der festen Stickstoffquelle,
b) etwa 40 bis etwa 95 Gew.% des pH-Regulierungsmaterials mit mindestens einer sekundären Funktion als Verdünnungsmittel, das gegen den reaktiven Komponenten der festen Zusammensetzung mit zwei Mitteln inert ist, und mindestens eine sekundäre Funktion als Trockenmittel aufweist, und
c) 0 bis etwa 55 Gew.% eines weiteren festen pH-Regulierungsmaterials, eines Trockenmittels, eines Stabilisators oder einer Kombination davon.

20. Zusammensetzung gemäß Anspruch 1, umfassend:
a) zusammen etwa 5 bis etwa 30 Gew.% des festen Hypohalogenits und der festen Stickstoffquelle,
b) die Kombination aus etwa 1 bis etwa 5 Gew.% festem pH-Regulierungsmaterial und etwa 1 bis etwa 79 Gew.% Verdünnungsmittel, das gegenüber den reaktiven Komponenten der festen Zusammensetzung mit zwei Mitteln inert ist, des Stabilisators, des Antiklumpmittels, des Bindemittels oder einer Kombination davon,
c) etwa 15 bis etwa 50 Gew.% Trockenmittel, und
d) etwa 0,2 bis etwa 5 Gew.% Sprengmittel, Fließregulierungsmittel oder einer Kombination davon.

21. Zusammensetzung gemäß Anspruch 1 umfassend:
a) zusammen etwa 5 bis etwa 30 Gew.% festes Hypohalogenit und feste Stickstoffquelle,
b) etwa 20 etwa 80 Gew.% des festen pH-Regulierungsmaterials, das mindestens eine sekundäre Funktion als Verdünnungsmittel, das gegenüber den reaktiven Komponenten der festen Zusammensetzung mit zwei Mitteln inert ist, Antiklumpmittel, Bindemittel oder Trockenmittel aufweist, und
c) etwa 40 bis etwa 75 Gew.% Stabilisator.

22. Zusammensetzung gemäß Anspruch 21, wobei der Stabilisator Natriumchlorid umfasst.

23. System umfassend eine erste feste Zusammensetzung mit einem einzigen Mittel und eine zweite feste Zusammensetzung mit einem einzigen Mittel getrennt von der ersten festen Zusammensetzung mit einem einzigen Mittel,
wobei die erste feste Zusammensetzung mit einem einzigen Mittel Folgendes umfasst:
a) eine feste Stickstoffquelle, die ein festes Ammoniumsalz mit mindestens einer N-H-Funktionalität ist, die geeignet ist, mit einem Hypohalogenit zu reagieren,
b) ein pH-Regulierungsmaterial,
und wobei die zweite feste Zusammensetzung mit einem einzigen Mittel Folgendes umfasst:
a) ein festes Hypohalogenit,
wobei die erste feste Zusammensetzung mit einem M einzigen Mittel und die zweite feste Zusammensetzung mit einem einzigen Mittel zusammen eine biozide Mischung bilden, wenn sie mit Wasser kombiniert werden.

24. System gemäß Anspruch 23, wobei die erste feste Zusammensetzung mit einem einzigen Mittel Folgendes umfasst:
a) etwa 10 bis etwa 80 Gew.% der festen Stickstoffquelle,
b) etwa 1 bis etwa 90 Gew.% des festen pH-Regulierungsmaterials,
c) etwa 0 bis etwa 60 Gew.% eines Trockenmittels, und
d) etwa 0 bis etwa 60 Gew.% eines festen Verdünnungsmittels, das gegenüber den festen Komponenten der Zusammensetzung inert ist, eines Bindemittels, eines Antiklumpmittels oder einer Kombination davon.

25. System gemäß Anspruch 23, wobei die zweite feste Zusammensetzung mit einem einzigen Mittel Folgendes umfasst:
a) etwa 10 bis etwa 100 Gew.% des festen Hypohalogenits, und
b) etwa 0 bis etwa 90 Gew.% des Trockenmittels,
c) etwa 0 bis etwa 60 Gew.% eines festen pH-Regulierungsmaterials, und
d) etwa 0 bis etwa 60 Gew.-% eines festen Verdünnungsmittels, das gegenüber den reaktiven Komponenten der Zusammensetzung inert ist, Bindemittels, Antiklumpmittels oder der Kombination davon.

26. System gemäß Anspruch 23, wobei die feste Stickstoffquelle ein Ammoniumsalz ist.

27. System gemäß Anspruch 23, wobei das pH-Regulierungsmaterial ein anorganisches Salz eines Carbonats oder ein anorganisches Salz eines Hydroxids umfasst.

28. System gemäß Anspruch 23, wobei die erste feste Zusammensetzung mit einem einzigen Mittel ferner ein Trockenmittel umfasst.

29. System gemäß Anspruch 28, wobei das Trockenmittel wasserfreies Calciumsulfat umfasst.

30. Verfahren zur Herstellung einer bioziden Mischung, umfassend das Kombinieren der Zusammensetzung gemäß Anspruch 1 mit einer Menge an Wasser, die zur Herstellung einer Höchstkonzentration an Haloamin von etwa 10 bis etwa 10.000 ppm geeignet ist.

31. Verfahren gemäß Anspruch 30, wobei das Gewichtsverhältnis von Wasser zu Zusammensetzung etwa 1000:1 bis etwa 5:1 beträgt.

32. Verfahren zur Herstellung einer bioziden Mischung, umfassend das Kombinieren der ersten und der zweiten festen Zusammensetzung mit einem einzigen Mittel des Systems gemäß Anspruch 23 mit einer Menge an Wasser, die zur Herstellung einer Höchstkonzentration an Haloamin von etwa 10 bis etwa 10.000 ppm geeignet ist.

33. Verfahren gemäß Anspruch 32, wobei das Gewichtsverhältnis von Wasser zu dem Gesamten der ersten und zweiten festen Zusammensetzung mit einem einzigen Mittel etwa 1000:1 bis etwa 5:1 beträgt.

34. Verfahren zur Verhinderung oder Inhibierung des Wachstums von lebenden Organismen in einer Flüssigkeit umfassend:
a) Herstellung einer bioziden Mischung gemäß Anspruch 30, und
b) Behandeln der Flüssigkeit mit der bioziden Mischung.

35. Verfahren zum Verhindern oder zur Inhibierung des Wachstums von lebenden Organismen in einer Flüssigkeit umfassend:
a) Herstellung einer bioziden Mischung gemäß Anspruch 32, und
b) Behandeln der Flüssigkeit mit der bioziden Mischung.

## Revendications

1. Composition solide à deux agents comprenant :
a) un hypohalogénite solide ;
b) une source d'azote solide, qui est un sel d'ammonium solide ayant au moins une fonctionnalité N-H capable de réagir avec un hypohalogénite ; et
c) un constituant qui est soit :
i) un agent solide d'ajustement du pH qui a éventuellement au moins une fonction secondaire comme diluant qui est inerte vis-à-vis des constituants réactifs de la composition solide à deux agents, d'un stabilisant, d'un agent anti-agglomération, d'un liant ou d'un agent déshydratant ; ou
ii) une association d'un agent solide d'ajustement du pH et d'un diluant qui est inerte vis-à-vis des constituants réactifs de la composition solide à deux agents, d'un stabilisant, d'un agent anti-agglomération, d'un liant, d'un agent déshydratant ou de leur association ; ladite composition à deux agents formant un mélange biocide lors de sa combinaison avec de l'eau.

2. Composition suivant la revendication 1, dans laquelle ledit hypohalogénite solide est l'hypochlorite de calcium.

3. Composition suivant la revendication 1, dans laquelle ladite source d'azote solide est un sel d'ammonium.

4. Composition suivant la revendication 1, dans laquelle ledit agent solide d'ajustement du pH ou ledit agent solide d'ajustement du pH qui a au moins une fonction secondaire maintient le mélange biocide à un pH d'environ 8 à environ 13.

5. Composition suivant la revendication 1, dans laquelle ledit agent solide d'ajustement du pH qui a au moins une fonction secondaire est un sel inorganique carbonate, phosphate, acétate, phtalate acide ou hydroxyde.

6. Composition suivant la revendication 1, dans laquelle ledit agent solide d'ajustement du pH n'a aucune fonction secondaire comme diluant qui est inerte vis-à-vis des constituants réactifs de la composition solide à deux agents ou du stabilisant.

7. Composition suivant la revendication 1, dans laquelle le rapport molaire de N dans la source d'azote solide à l'halogène dans l'hypohalogénite solide est d'environ 2:1 à environ 0,5:1.

8. Composition suivant la revendication 1, dans laquelle ledit hypohalogénite solide et ladite source d'azote solide représentent ensemble environ 5 à environ 30 % en poids de la composition totale.

9. Composition suivant la revendication 1, comprenant en outre un agent déshydratant.

10. Composition suivant la revendication 1, comprenant un outre un stabilisant.

11. Composition suivant la revendication 10, dans laquelle le stabilisant est le chlorure de sodium.

12. Composition suivant la revendication 1, comprenant en outre un diluant qui est inerte vis-à-vis des constituants réactifs de la composition solide à deux agents, de l'agent anti-agglomération ou de leur association.

13. Composition suivant la revendication 12, dans laquelle ledit diluant, ledit agent anti-agglomération ou leur association comprend un sel inorganique.

14. Composition suivant la revendication 1, consistant essentiellement en :
a) un hypohalogénite solide ;
b) un sel d'ammonium ; et
c) un agent solide d'ajustement du pH, qui a au moins une fonction secondaire comme diluant qui est inerte vis-à-vis des constituants réactifs de la composition solide à deux agents, du stabilisant, de l'agent anti-agglomération, du liant ou de l'agent déshydratant.

15. Composition suivant la revendication 14, dans laquelle ledit hypohalogénite solide et ledit sel d'ammonium représentent ensemble environ 5 à environ 30 % en poids de la composition totale.

16. Composition suivant la revendication 14, dans laquelle ledit agent solide d'ajustement du pH représente environ 20 à 90 % en poids de la composition totale.

17. Composition suivant la revendication 14, dans laquelle ledit agent solide d'ajustement du pH comprend un sel inorganique carbonate.

18. Composition suivant la revendication 1, comprenant :
a) environ 5 à environ 30 % en poids dudit hypohalogénite solide et de ladite source d'azote solide, pris ensemble ;
b) environ 20 à envion 80 % en poids dudit agent solide d'ajustement du pH qui a au moins une fonction secondaire ; et
c) environ 15 à environ 75 % en poids d'un agent déshydratant.

19. Composition suivant la revendication 1, comprenant :
a) environ 5 à environ 30 % en poids dudit hypohalogénite solide et de ladite source d'azote solide, pris ensemble ;
b) environ 40 à environ 95 % en poids dudit agent d'ajustement du pH ayant au moins une fonction secondaire comme diluant qui est inerte vis-à-vis des constituants réactifs de la composition solide à deux agents et au moins une fonction secondaire comme agent déshydratant ; et
c) 0 à environ 55 % en poids d'un agent solide supplémentaire d'ajustement du pH, d'un agent déshydratant, d'un stabilisant ou de leur association.

20. Composition suivant la revendication 1, comprenant :
a) environ 5 à environ 30 % en poids dudit hypohalogénite solide et de ladite source d'azote solide, pris ensemble ;
b) ladite association d'environ 1 à environ 5 % en poids d'agent solide d'ajustement du pH et d'environ 1 à environ 79 % en poids de diluant qui est inerte vis-à-vis des constituants réactifs de la composition solide à deux agents, du stabilisant, de l'agent anti-agglomération, du liant ou de leur association ;
c) environ 15 à environ 50 % en poids d'un agent déshydratant ; et
d) environ 0,2 à environ 5 % en poids d'un agent de délitement, d'un agent de glissement ou de leur association.

21. Composition suivant la revendication 1, comprenant :
a) environ 5 à environ 30 % en poids d'hypohalogénite solide et de source d'azote solide, pris ensemble ;
b) environ 20 à environ 80 % en poids d'agent solide d'ajustement du pH qui a au moins une fonction secondaire comme diluant qui est inerte vis-à-vis des constituants réactifs de la composition solide à deux agents, de l'agent anti-agglomération, du liant ou de l'agent déshydratant ; et
c) environ 40 à environ 75 % en poids d'un stabilisant.

22. Composition suivant la revendication 21, dans laquelle ledit stabilisant comprend le chlorure de sodium.

23. Système comprenant une première composition solide à un seul agent et une seconde composition solide à un seul agent séparée de ladite première composition solide à un seul agent, dans lequel ladite première composition solide à un seul agent comprend :
a) une source d'azote solide qui est un sel d'ammonium solide ayant au moins une fonctionnalité N-H capable de réagir avec un hypohalogénite ;
b) un agent d'ajustement du pH ;
et dans lequel ladite seconde composition solide à un seul agent comprend :
a) un hypohalogénite solide ;
ladite première composition solide à un seul agent et ladite seconde composition solide à un seul agent formant ensemble un mélange biocide lors de leur combinaison avec de l'eau.

24. Système suivant la revendication 23, dans lequel ladite première composition solide à un seul agent comprend :
a) environ 10 à environ 80 % en poids de ladite source d'azote solide ;
b) environ 1 à environ 90 % en poids dudit agent solide d'ajustement du pH ;
c) environ 0 à environ 60 % en poids d'un agent déshydratant ; et
d) environ 0 à environ 60 % en poids d'un diluant solide qui est inerte vis-à-vis des constituants réactifs de la composition, d'un liant, d'un agent anti-agglomération ou de leur association.

25. Système suivant la revendication 23, dans lequel ladite seconde composition solide à un seul agent comprend :
a) environ 10 à environ 100 % en poids dudit hypohalogénite solide ; et
b) environ 0 à environ 90 % en poids dudit agent déshydratant ;
c) environ 0 à environ 60 % en poids d'un agent solide d'ajustement du pH ; et
d) environ 0 à environ 60 % en poids d'un diluant solide qui est inerte vis-à-vis des constituants réactifs de la composition, d'un liant, d'un agent anti-agglomération ou de leur association.

26. Système suivant la revendication 23, dans lequel ladite source d'azote solide est un sel d'ammonium.

27. Système suivant la revendication 23, dans lequel ledit agent d'ajustement du pH comprend un sel inorganique carbonate ou un sel inorganique hydroxyde.

28. Système suivant la revendication 23, dans lequel ladite première composition solide à un seul agent comprend en outre un agent déshydratant.

29. Système suivant la revendication 28, dans lequel ledit agent déshydratant comprend le sulfate de calcium anhydre.

30. Procédé de préparation d'un mélange biocide, comprenant la combinaison de la composition de la revendication 1 avec une quantité d'eau convenant à la production d'une concentration maximale en halogénamine d'environ 10 à environ 10 000 ppm.

31. Procédé suivant la revendication 30, dans lequel le rapport pondéral de l'eau à la composition va d'environ 1000:1 à environ 5:1.

32. Procédé de préparation d'un mélange biocide, comprenant la combinaison desdites première et seconde compositions solides à un seul agent du système de la revendication 23 avec une quantité d'eau convenant à la production d'une concentration maximale en halogénamine d'environ 10 à environ 10 000 ppm.

33. Procédé suivant la revendication 32, dans lequel le rapport pondéral de l'eau au total desdites première et seconde compositions solides à un seul agent va d'environ 1000:1 à environ 5:1.

34. Procédé pour prévenir ou inhiber la croissance d'organismes vivants dans un liquide, comprenant :
a) la préparation d'un mélange biocide suivant la revendication 30 ; et
b) le traitement dudit liquide avec ledit mélange biocide.

35. Procédé pour prévenir ou inhiber la croissance d'organismes vivants dans un liquide, comprenant :
a) la préparation d'un mélange biocide suivant la revendication 32 ; et
b) le traitement dudit liquide avec ledit mélange biocide.
